# EUROPÄISCHE PATENTANMELDUNG

(11) **EP 3 051 035 A1**
(43) Veröffentlichungstag der Anmeldung: **03.08.2016**
(21) Anmeldenummer: 15153147.2
(22) Anmeldetag: 30.01.2015
(51) Int. Cl.: E03F 5/10, E03F 5/22

(54) **Anordnung zur Aufnahme einer in einem Kanalisationsrohr geführten Flüssigkeit**

(71) Anmelder: Luri.watersystems.Gmbh, 10179 Berlin (DE)
(72) Erfinder: Steeg, Ralf, 10961 Berlin (DE)
(74) Vertreter: Döring, Roger

(57) **Zusammenfassung**

Es wird eine Anordnung zur Aufnahme von Flüssigkeit angegeben, die in einem Kanalisationsrohr (1) geführt ist, bei welcher mindestens ein in Gebrauchslage mit dem Inneren des Kanalisationsrohrs verbundenes Auffangbecken eingesetzt ist. Das Auffangbecken ist als rohrförmiger Behälter (3) aus einem mechanisch stabilen Kunststoff ausgeführt, der an seinem in Gebrauchslage unteren Ende einen Boden aufweist. Der Behälter (3) ist in Gebrauchslage so mit dem Kanalisationsrohr (1) verbunden, daß in demselben fließende Flüssigkeit im oberen Bereich des Behälters (3) in denselben gelangt. In einem unterhalb des Behälters (3) befindlichen, mit dem Behälter (3) verbundenen Raum (4) ist eine Pumpe angeordnet, an die eine mit dem Inneren des Kanalisationsrohrs (1) verbundene Rohrleitung angeschlossen ist.

## Beschreibung

Die Erfindung bezieht sich auf eine Anordnung zur Aufnahme von Flüssigkeit, die in einem Kanalisationsrohr geführt ist, bei welcher mindestens ein in Gebrauchslage mit dem Inneren der Kanalisation verbundenes Auffangbecken eingesetzt ist.

Derartige Anordnungen sind seit Jahren bekannt und weltweit im Einsatz. Ein Auffangbecken - im Folgenden kurz "Becken" genannt - dient im Wesentlichen dazu, die Menge von in einer Kanalisation geführter Flüssigkeit, bei der es sich im wesentlichen um Abwasser handelt, sinnvoll zu regulieren. Statt des Wortes "Flüssigkeit" wird im Folgenden das Wort "Abwasser" verwendet, bei dem es sich um mehr oder weniger durch Feststoffe (Frachten) belastete Mischwasser handelt. Die Becken sind insbesondere dann von Bedeutung, wenn es regnet bzw. geregnet hat, mit einer dann erhöhten Menge von im Abwasser enthaltenem Niederschlagswasser. Das aus der Kanalisation austretende Abwasser wird in herkömmlicher Technik in einem Becken zwischengespeichert. Es kann dann verlangsamt beispielsweise an einen Vorfluter weitergegeben oder nach Ende der Regenfälle in die Kanalisation zurückgepumpt werden, gegebenenfalls nach mechanischer Reinigung. Dazu kann das Abwasser beispielsweise mittels einer Pumpe aus dem Becken herausgepumpt oder bei geeigneten räumlichen Gegebenheiten durch Betätigung eines Schiebers abgelassen werden.

Die bisher bekannten Becken bestehen beispielsweise aus Beton. Ihr Aufbau ist zeitraubend und aufwendig. Sie nehmen in Form einer "Wanne" bzw. eines "Schühkartons" mit festliegenden Abmessungen in Abhängigkeit von der zu erwartenden, berechenbaren Menge an Abwasser mit entsprechendem Platzbedarf eine mehr oder weniger große Fläche ein.

In der DE 20 2005 000 680 U1 ist ein Wasserspeicher mit Pumpwerk beschrieben, der aus Kunststoff besteht und beispielsweise für das Sickerwasser von Deponieanlagen eingesetzt werden soll. Der Wasserspeicher besteht aus einem Pumpenschacht und einen Sammelschacht, zwischen denen ein Stauraumrohr angebracht ist. Sickerwasser wird dem Sammelschacht über eine etwa in halber Höhe desselben in denselben einmündende Zulaufleitung zugeführt. In dem vom Stauraumrohr durch eine Wand getrennten Pumpenschacht sind Pumpen angeordnet, welche gegebenenfalls über Ablaufleitungen Flüssigkeit aus dem Stauraumrohr ansaugen und über Druckleitungen aus dem Wasserspeicher herausfördern.

Der Erfindung liegt die Aufgabe zugrunde, die eingangs geschilderte Anordnung einfacher und variabler zu gestalten.

Diese Aufgabe wird gemäß der Erfindung dadurch gelöst,
- daß das Auffangbecken als rohrförmiger Behälter aus einem mechanisch stabilen Kunststoff ausgeführt ist, der an seinem in Gebrauchslage unteren Ende einen Boden aufweist,
- daß der Behälter in Gebrauchslage so mit dem Kanalisationsrohr verbunden ist, daß in demselben fließende Flüssigkeit im oberen Bereich des Behälters in denselben gelangt, und
- daß in einem unterhalb des Behälters befindlichen, mit dem Behälter verbundenen Raum eine Pumpe angeordnet ist, an die eine mit dem Inneren des Kanalisationsrohrs verbundene Rohrleitung angeschlossen ist.

Als Becken wird in dieser Anordnung mindestens ein rohrartiger Behälter aus einem mechanisch stabilen Kunststoff eingesetzt, bei dem es sich in bevorzugter Ausführungsform um einen glasfaserverstärkten Kunststoff handelt. Ein Becken mit einem entsprechenden Behälter bzw. mehr als einem Behälter kann im Verlauf eines Kanalisationsrohrs an beliebiger Stelle, und zwar auch an zwei oder mehr Stellen und auch an einem Ende eines Kanalisationsrohrs eingesetzt werden. Das Becken kann in einer erforderlichen Größe bzw. mit vorgegebenen Abmessungen in einer Fertigungsstätte vorgefertigt werden. Es kann dann als fertiges Becken am Montageort ohne zusätzliche Maßnahmen aufgebaut bzw. installiert werden. Ein modulartiger Aufbau des Beckens aus zwei oder mehr Behältern bietet auch die Möglichkeit zur Vergrößerung des Volumens des Beckens oder einer nachträglichen Erweiterung desselben.

Die bei einer solchen Vorfertigung gegebene hohe Fertigungspräzision erlaubt eine sichere und einfache technische Abstimmung der Gewerke untereinander und spart Kosten bei der Umsetzung. Das durch den Kunststoff bedingte geringe Gewicht sichert eine einfache Handhabung des Beckens bzw. des Behälters auf einer Baustelle. Die relativ geringen Abmessungen des Behälters führen gegebenenfalls zu einer Reduzierung des Aushubs von Erdreich und zu einer besseren Ausnutzung einer zur Verfügung stehenden Baugrube. Der oder die Behälter kann oder können in weiten Grenzen einen beliebigen Durchmesser haben und beliebig lang sein, beispielsweise bis zu 20 m.

Der Behälter kann an seinem unteren Ende beispielsweise einen schräg verlaufenden Boden mit einem Gefälle von beispielsweise 5 % haben. An der tiefsten Stelle eines solchen Bodens ist dann eine Auslaßöffnung angebracht, durch welche das Abwasser in den die Pumpe enthaltenden Raum (Pumpensumpf) gelangt. Die Pumpe ist damit dauernd von Abwasser umgeben und sie wird durch dasselbe vorteilhafterweise gekühlt. Das Abwasser dämpft auch das von der Pumpe bei ihrem Betrieb erzeugte Geräusch. Das im Becken gespeicherte Abwasser bleibt solange in demselben, bis die Pumpe eingeschaltet wird. Das geschieht mit Vorteil dann, wenn die Menge des Abwassers wieder auf ein Normalmaß zurückgegangen ist, wenn also insbesondere keine wesentliche Regenmenge mehr anfällt. Die Pumpe pumpt nach ihrem Einschalten das Abwasser über die an dieselbe angeschlossene Rohrleitung in das Kanalisationsrohr zurück.

Die Länge des Behälters hängt von den Gegebenheiten vor Ort ab. Wenn eine ausreichend tiefe Baugrube nicht zur Verfügung steht, können für das Becken zwei oder mehr Behälter eingesetzt werden, die modulartig zusammengebaut werden können (Baukastenprinzip). Die Behälter können dann nach dem Prinzip kommunizierender Röhren relativ gleichmäßig mit dem Abwasser gefüllt werden oder auch nacheinander, wenn ihre Verbindungen in Gebrauchslage im oberen Bereich liegen.

Jeder Behälter kann von vornherein - und das kann ebenfalls in Vorfertigung durchgeführt werden - alle für den Betrieb des Beckens erforderlichen Einbauten enthalten. Das sind beispielsweise die Pumpe, ein Füllstandsmesser und ein Reinigungssystem. Die Pumpe kann auch mit einem Zugelement ausgerüstet sein, mittels dessen sie für Reinigungs- und/oder Reparaturzwecke aus dem Becken herausgezogen und wieder in dasselbe eingesetzt werden kann.

Ein Reinigungssystem enthält mit Vorteil ein auf einem Schwimmkörper angebrachtes Düsensystem. Der Schwimmkörper liegt in Ruhestellung vorzugsweise auf dem Boden des Behälters. Er ist an einer höhenverstellbaren Halterung angebracht, beispielsweise an einem Teleskopgestänge oder einem Scherengestänge. Der Schwimmkörper wird vom aufsteigenden Abwasser mitgenommen. Wenn das Abwasser aus dem jeweiligen Behälter abgepumpt werden soll bzw. muß, wird das Düsensystem bei einem bestimmten (reduzierten) Füllstand durch ein Signal des Füllstandsmessers betätigt, so daß im Behälter vorhandener Schmutz von seiner Wandung abgespült wird. Dabei reicht es gegebenenfalls aus, wenn nur der Teil des Behälters gereinigt wird, der mit Abwasser gefüllt war.

Ausführungsbeispiele des Erfindungsgegenstandes sind in den Zeichnungen dargestellt.

Es zeigen:
Fig. 1 in schematischer Darstellung eine Anordnung nach der Erfindung.
Fig. 2 eine gegenüber Fig. 1 ergänzte Anordnung.
Fig. 3 ebenfalls schematisch ein gegenüber Fig. 1 abgewandelte Anordnung.
Fig. 4 einen in der Anordnung nach Fig. 1 einsetzbaren Behälter mit Anbauten.
Fig. 5 einen Behälter als Einzelteil.
Fig. 6 bis 8 schematisch ein Becken mit mehreren Behältern in drei unterschiedlichen Ausführungsformen.

In der folgenden Beschreibung wird weiter statt des Wortes "Auffangbecken" das kürzere Wort "Becken" verwendet. Als Becken wird mindestens ein rohrförmiger Behälter eingesetzt, der in bevorzugter Ausführungsform aus glasfaserverstärktem Kunststoff besteht. Geeignete Kunststoffe sind beispielsweise Duroplaste, wie Epoxidharz, oder Thermoplaste, wie Polyamid. Ein derartiger Kunststoff ist von pH 2 bis pH 11 dauerhaft beständig und korrosionsfrei. Es macht zusätzliche Beschichtungen und Auskleidungen des Behälters überflüssig. Die geringe Rauhigkeit der Oberfläche des Behälters (k < 0,03 mm) ermöglicht ein gutes Selbstreinigungsverhalten.

Der Aufbau des Beckens richtet sich einerseits nach der Örtlichkeit, an der es installiert werden soll, und andererseits nach der Menge an maximal anfallendem Abwasser, die als Erfahrungswert vorliegt oder auch berechnet werden kann. Das Becken besteht in diesem Sinne aus mindestens einem rohrförmigen Behälter oder aus zwei oder mehr zu einer Einheit verbundenen oder modulartig zusammengebauten Behältern.

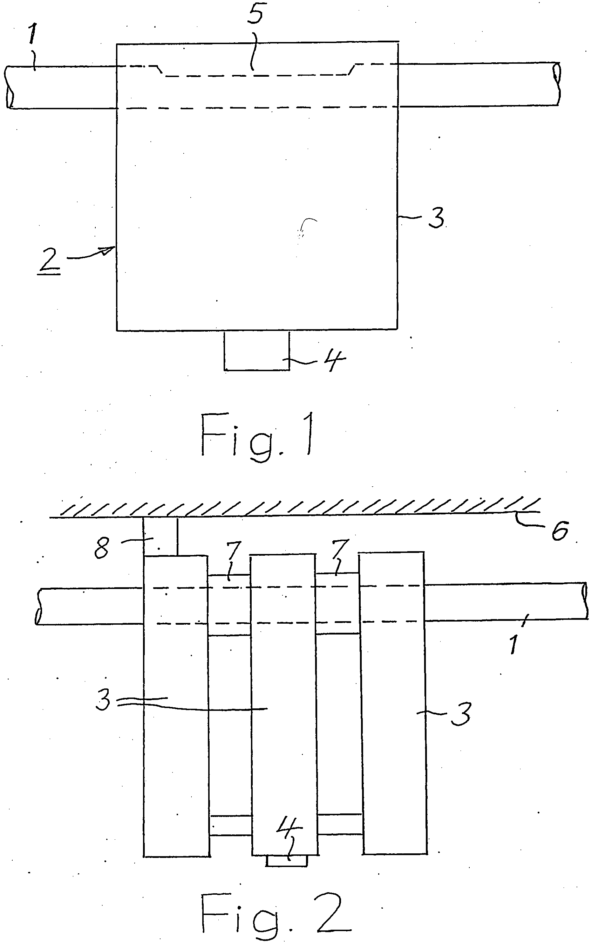

In Fig. 1 ist ein Abschnitt eines Kanalisationrohrs 1 schematisch angedeutet, an welchem ein Becken 2 installiert ist. Das Becken 2 besteht aus einem rohrförmigen Behälter 3 aus mechanisch stabilem Kunststoff, an dessen unterem, von dem Kanalisationsrohr 1 wegweisenden Ende ein Raum 4 vorhanden ist, in dem in Arbeitsposition eine Pumpe angebracht ist. Im dargestellten Ausführungsbeispiel ist das Kanalisationsrohr 1 durch den Behälter 3 hindurchgeführt. Es ist in dem vom Behälter 3 umschlossenen Bereich 5 oben offen, so daß Abwasser aus dem Kanalisationsrohr 1 austreten und in den Behälter 3 gelangen kann, wenn eine beispielsweise durch Regenfälle bedingte, erhöhte Menge von Abwasser anfällt. Die oben liegende Öffnung des Kanalisationsrohrs 1 im Bereich 5 hat die Funktion eines "Überlaufs". Der im Bereich 5 verbleibende untere Teil des Kanalisationsrohrs 1 hat dann die Funktion einer Rinne, durch welche das Abwasser ungehindert weiterfließen kann.

Das im Bereich 5 verbleibende "Restrohr" ist beispielsweise ein ¾ Rohr, so daß das Kanalisationsrohr zu ¼ geöffnet wäre. Dabei könnte mit Vorteil der lichte Durchmesser des Kanalisationsrohrs in diesem Bereich zunächst so weit erweitert werden, daß die lichten Abmessungen des Restrohres der lichten Weite des Kanalisationsrohrs entsprechen. Das üblicherweise anfallende Abwasser kann dann weiter durch das Kanalisationsrohr fließen, ohne im Bereich 5 überzulaufen.

Der rohrförmige Behälter 3 ist mit Vorteil ein Hohlzylinder. Er kann einen lichten Durchmesser von beispielsweise 3 m haben und beispielsweise bis zu 50 m lang sein. Ein für einen Behälter 3 verwendbares Rohr kann in großer Länge beispielsweise durch Extrusion oder durch Wickeln von Bändern auf einen Kern erzeugt werden, die beispielsweise durch Laminieren an ihren im Wickel aneinander liegenden Kanten miteinander verbunden werden. Von einem solchen Rohr kann eine für einen Behälter 3 geeignete Länge abgetrennt werden.

Die Anordnung nach der Erfindung kann mit mehr als einem Behälter 3 auch gemäß Fig. 2 aufgebaut werden. Das Kanalisationsrohr 1 ist dann durch beispielsweise drei Behälter 3 hindurchgeführt. Eine solche Anordnung ist mit Vorteil im Bereich einer Straße 6 einsetzbar, in welcher das Kanalisationsrohr 1 beispielsweise unterhalb einer Fahrbahn verläuft. Das Becken besteht in der Ausführungsform nach Fig. 2 aus den drei in ihrem oberen Bereich durch Anschlußstutzen 7 miteinander verbundenen Behältern 3. Das Kanalisationsrohr 1 ist im Bereich der drei Behälter 3 in Längsrichtung geöffnet. Es kann dann in diesem Bereich wie schon erwähnt beispielsweise als ¾-Rohr ausgeführt sein. Grundsätzlich reicht es aber aus, wenn das Kanalisationsrohr 1 in dem angegebenen Bereich entsprechend Fig. 1 geöffnet ist, wobei nur eine zum Austritt von Abwasser ausreichende Öffnung vorhanden sein muß.

Das Kanalisationsrohr 1 ist entsprechend Fig. 2 durch alle drei Behälter 3 hindurchgeführt. Im Kanalisationsrohr 1 geführtes Abwasser wird im Normalfall vollständig durch dasselbe geleitet, ohne in die Behälter 3 zu gelangen. Bei einem erhöhten Anfall von Regenwasser steigt der Pegel des Abwassers im Kanalisationsrohr 1 an. Ab einer entsprechend vergrößerten Menge an Abwasser kann dasselbe dann im Bereich der Behälter 3 überlaufen und in dieselben gelangen. An der Stelle 8 ist in Fig. 2 ein Einstieg in das Kanalisationsrohr 1 angedeutet.

Wie bereits erwähnt, kann das Becken an jeder beliebigen Stelle im Verlauf eines Kanalisationsrohrs installiert werden. Ein Becken kann auch an zwei oder mehr Stellen im Verlauf des Kanalisationsrohrs angeordnet werden. Es ist auch möglich, das Becken an einem Ende eines Überlaufrohrs eines Kanalisationsrohrs zu installieren, und von dort aus gegebenenfalls an eine geeignete Stelle des Kanalisationsrohrs zurückzupumpen, beispielsweise in die Nähe eines Klärwerks.

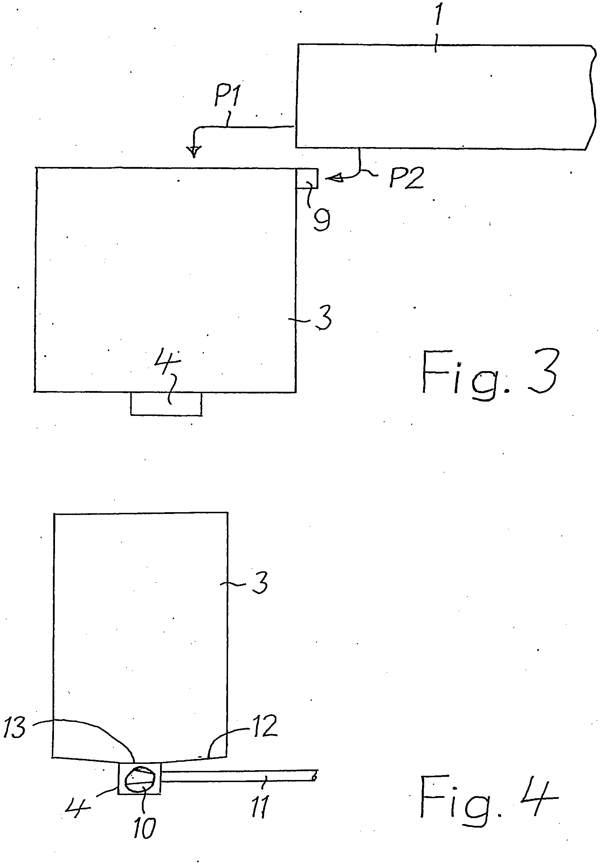

In Fig. 3 ist das Ende eines Kanalisationsrohrs 1 angedeutet, aus dem entsprechend den Pfeilen P1 oder P2 Abwasser austreten kann. Das Abwasser gelangt in den rohrförmigen Behälter 3 aus mit Vorteil glasfaserverstärktem Kunststoff, der an seinem in der dargestellten Gebrauchslage unteren Ende verschlossen ist. Der Behälter 3 kann durch einen Deckel abgedeckt sein, der gegebenenfalls ein Durchgangsloch für das Abwasser hat. Das Abwasser kann entsprechend dem Pfeil P1 von oben in den Behälter 3 gelangen oder demselben entsprechend dem Pfeil P2 über einen Stutzen 9 zugeführt werden. Es kann aber auch in den Behälter 3 hineingepumpt werden. Unterhalb des Behälters 3 ist in dem Raum 4 eine Pumpe 10 angeordnet (Fig. 4), an welche eine Rohrleitung 11 angeschlossen ist, über welche das Abwasser durch die Pumpe 10 gegebenenfalls in das Kanalisationsrohr 1 zurückgepumpt wird. Die Rohrleitung 11 ist in Fig. 3 nur prinzipiell angedeutet. Sie kann mit Vorteil auch innerhalb des Behälters 3 angeordnet sein.

Der Behälter 2 ist gemäß Fig. 4 durch einen Boden 12 verschlossen, welcher mit Vorteil schräg mit einer Steigung von beispielsweise 5 % gegenüber der Horizontalen verläuft. Der Boden 12 ist gemäß Fig. 4 vorzugsweise trichterförmig ausgeführt. Am tiefsten Punkt ist im Boden 12 des Behälters 3 eine Auslaßöffnung 13 angebracht, die in den die Pumpe 10 enthaltende Raum 4 mündet.

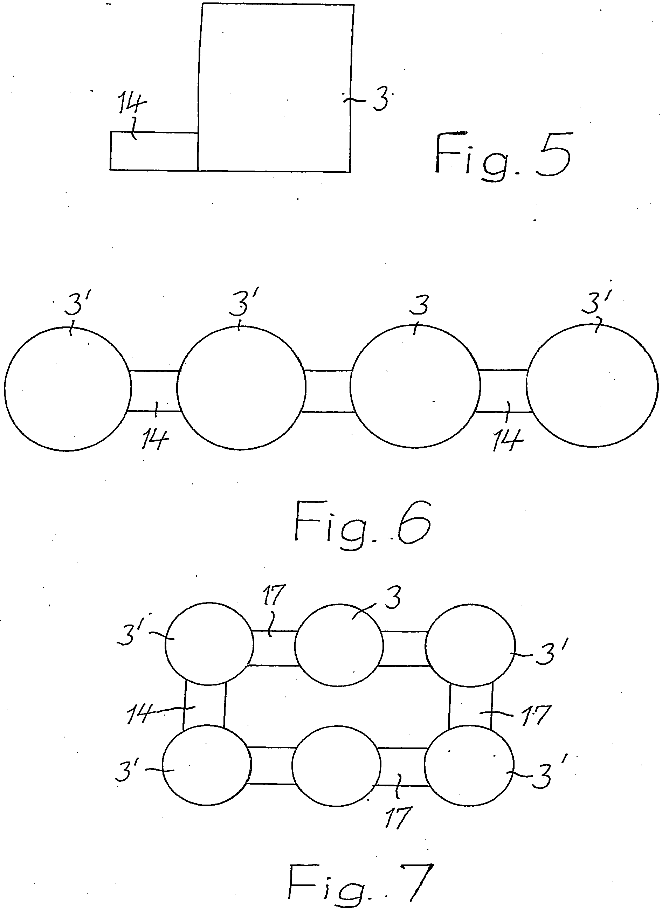

Grundsätzlich reicht für den Aufbau eines Beckens ein in Fig. 5 als Einzelteil dargestellter Behälter 3 aus. Ein solcher Behälter 3 kann zur modulartigen Erweiterung des Beckens von vornherein mit einem Anschlußstutzen 14 ausgerüstet sein, an den ein zweiter Behälter angeschlossen werden kann, so daß das in den Behälter 3 eingefüllte Abwasser auch in den zweiten Behälter gelangt.

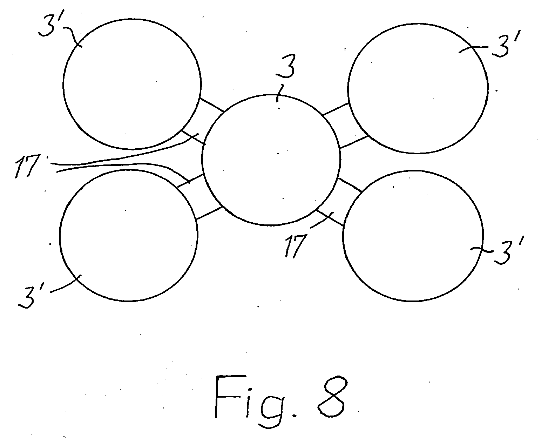

In diesem Sinne können zwei oder mehr Behälter modulartig zu einem großvolumigen Becken zusammengebaut werden, und zwar entsprechend Fig. 6 beispielsweise linear nebeneinander oder gemäß Fig. 7 auch in zweidimensionaler Anordnung. Auch eine sternförmige Anordnung der Behälter gemäß Fig. 8 ist möglich. In allen Ausführungsformen mit zwei oder mehr, modulartig zusammengebauten Behältern ist einer der Behälter als Behälter 3 als Grundmodul eines Beckens anzusehen, mit dem die weiteren Behälter 3' für das Abwasser durchlässig mittels Anschlußstutzen 14 verbunden sind. Die Pumpe 10 wird dann zweckmäßig jeweils dem Behälter 3 zugeordnet.

Ein Becken kann auch aus zwei oder mehr rohrförmigen Behältern bestehen, die während der Fertigung zu einer einteiligen Einheit miteinander verbunden sind, wobei zwischen den einzelnen Behältern rohrartige Verbindungen ausgeformt sind, welche das Abwasser ungehindert durchlassen.

## Patentansprüche

1. Anordnung zur Aufnahme von Flüssigkeit, die in einem Kanalisationsrohr geführt ist, bei welcher mindestens ein in Gebrauchslage mit dem Inneren des Kanalisationsrohrs verbundenes Auffangbecken eingesetzt ist, **dadurch gekennzeichnet,**
- **daß** das Auffangbecken als rohrförmiger Behälter (3) aus einem mechanisch stabilen Kunststoff ausgeführt ist, der an seinem in Gebrauchslage unteren Ende einen Boden (12) aufweist,
- **daß** der Behälter (3) in Gebrauchslage so mit dem Kanalisationsrohr (1) verbunden ist, daß in demselben fließende Flüssigkeit im oberen Bereich des Behälters (3) in denselben gelangt, und
- **daß** in einem unterhalb des Behälters (3) befindlichen, mit dem Behälter (3) verbundenen Raum (4) eine Pumpe (10) angeordnet ist, an die eine mit dem Inneren des Kanalisationsrohrs (1) verbundene Rohrleitung (11) angeschlossen ist.

2. Anordnung nach Anspruch 1, **dadurch gekennzeichnet,**
- **daß** das Kanalisationsrohr (1) in Gebrauchslage im oberen Bereich des Behälters (3) durch denselben hindurchgeführt ist und
- **daß** das Kanalisationsrohr (1) in dem vom Behälter (3) umschlossenen Bereich eine oben liegende, als Überlauf.wirkende Öffnung hat.

3. Anordnung nach Anspruch 1, **dadurch gekennzeichnet, daß** der Behälter (3) aus einem glasfaserverstärkten Kunststoff aufgebaut ist.

4. Anordnung nach Anspruch 1, **dadurch gekennzeichnet, daß** der Boden (15) des Behälters (3) eine Auslaßöffnung (13) hat, welche in den die Pumpe (10) enthaltenden Raum (4) übergeht.

5. Anordnung nach Anspruch 4, **dadurch gekennzeichnet, daß** der Boden (15) des Behälters (3) einen in Richtung der Auslaßöffnung (13) gerichteten schrägen Verlauf hat, vorzugsweise mit einer Steigung von maximal 5 % gegenüber der Horizontalen.

6. Anordnung nach Anspruch 1, **dadurch gekennzeichnet, daß** in dem Behälter (3) ein Düsensystem angebracht ist, das auf einem mit einer höhenverstellbaren Halterung verbundenen Schwimmkörper angeordnet ist.

7. Anordnung nach Anspruch 1, **dadurch gekennzeichnet, daß** das Auffangbecken mindestens zwei rohrförmige Behälter aufweist, die modulartig über lösbare Verbindungsstellen miteinander verbunden sind, welche die Flüssigkeit durchlassen.

8. Anordnung nach Anspruch 1, **dadurch gekennzeichnet, daß** das Auffangbecken mindestens zwei als Einheit zusammengefaßte und über einen Anschlußstutzen (14) miteinander verbundene rohrförmige Behälter aufweist.

## Geänderte Patentansprüche

### Geänderte Patentansprüche gemäss Regel 137(2) EPÜ.

**1.** Anordnung mit einem Auffangbecken, das in Gebrauchslage mit dem Inneren eines Kanalisations rohrs verbunden ist und zur Aufnahme von Flüssig ke it dient, welche im Kanalisationsrohrge führt ist, **dadurch gekennzeichnet,**
- **daß** alsAuffangbecken mindestens zweirohrförmige Behälter(3) aus einem mechanisch stabilen Kunststoff e ing e se tzt sind, die modulartig überlösbare Verbindungsstellen miteinanderverb unden sind, welche die Flüssigke it d urc hla sse n, deren resultierende Abmessungen entsprechend derMenge von anfallender, im Ka na lisa tio nsro hrgeführterFlüssigkeitbemessen sind und d ie an ihrem in Gebrauchslage unteren Ende einen Boden (12) aufweisen,
- **daß** das Auffangbecken in Gebrauchslage so mit dem Kanalisationsrohr(1) verbunden ist, daß in demselben fließende und ausdemselben austretende Flüssig keit im oberen Bereich desAuffangbeckensin dasselbe gelangt, und
- **daß** in einem unterhalb des Auffangbeckensbefindlichen, mit demselben verbundenen Raum (4) eine Pumpe (10) angeordnet ist, an die eine mit dem Inneren des Kanalisationsrohrs (1) verbundene Rohrleitung (11) angeschlossen ist, durch welche die in den Behältern (3) vorhandene Flüssigkeit über die Rohrleitung (11) in dasKanalisationsrohr(1) zurückpumpbarist, und zwardurch Einschalten derPumpe (10) nach Maßgabe derim Kanalisationsrohr(1) geführten Flüssigkeit, wenn dieselbe auf e in Normalmaß zurückgegangen ist.

**2.** Anordnung nach Anspruch 1, **dadurch gekennzeichnet,**
- **daß** dasKanalisationsrohr(1) in Gebrauchslage im oberen Bereich des Behälters (3) durch denselben hindurch geführt ist und
- **daß** dasKanalisationsrohr(1) in dem vom Behälter(3) umschlossenen Bereich eine oben liegende, als Überlaufwirkende Öffnung hat.

**3.** Anordnung nach Anspruch 1, **dadurch gekennzeichnet, daß** der Behälter (3) aus eine m g la sfa se rve rstä rkte n Kunststo ff a ufg e baut ist.

**4.** Anordnung nach Anspruch 1, **dadurch gekennzeichnet, daß** der Boden (15) des Behälters (3) eine Auslaßöffnung (13) hat, welche in den die Pumpe (10) enthaltenden Raum (4) übergeht.

**5.** Anordnung nach Anspruch 4, **dadurch gekennzeichnet, daß** der Boden (15) des Behälters (3) einen in Richtung der Auslaßöffnung (13) gerichtetenschrägen Verlauf hat, vorzugsweise mit einer Steigung von maximal 5 % gegenüberder Horizontalen.

**6.** Anordnung nach Anspruch 1, **dadurch gekennzeichnet, daß** in dem Behälter(3) ein Düsensystem angebrachtist, dasaufeinem mit einer höhen verstellbaren HakerungverbundenenSchwimmkörperangeoidnet ist.
